# FASCICULE DE BREVET EUROPEEN

(11) **EP 2 376 329 B1**
(45) Date de publication et mention de la délivrance du brevet: **21.08.2013**
(21) Numéro de dépôt: 09784343.7
(22) Date de dépôt: 19.11.2009
(51) Int. Cl.: B64C 25/40, B64C 25/24

(54) **ATTERRISSEUR COMPORTANT UN DISPOSITIF ELECTROMECANIQUE MULTIFONCTIONS**
LANDUNGSGESTELL MIT EINEM ELEKTROMECHANISCHEN MULTIFUNKTIONSGERÄT
LANDING GEAR COMPRISING A MULTIFUNCTION ELECTROMECHANICAL DEVICE

(30) Priorité: 02.12.2008 FR 0806755
(43) Date de publication de la demande: 19.10.2011
(73) Titulaire: Messier-Bugatti-Dowty, 78140 Velizy Villacoublay (FR)
(72) Inventeur: ALLEAU, Jean-Luc, F-78125 Orcemont (FR); SCHMIDT, Robert Kyle, GL52 6NP Cheltenham (GB)
(74) Mandataire: Parzy, Benjamin Alain
(86) Numéro de dépôt international: PCT/FR2009/001327
(87) Numéro de publication internationale: WO 2010/063895

(56) Documents cités:
- DE-A1- 2 050 011
- DE-A1- 2 162 974
- DE-U1-202008 002 977
- US-A- 1 524 352
- US-A- 2 460 387
- US-A- 3 762 670

## Description

L'invention concerne un atterrisseur équipé d'un dispositif électromécanique multifonctions.

### ARRIERE-PLAN DE L'INVENTION

La plupart des atterrisseurs sont articulés sur l'aéronef entre une position déployée dans laquelle l'atterrisseur est confirmé par un organe de contreventement, et une position repliée dans laquelle l'atterrisseur vient se loger dans une soute de l'aéronef. On connaît des atterrisseurs comportant un actionneur de relevage pour remonter l'atterrisseur en soute après le décollage. Cet actionneur se présente en général sous la forme d'un actionneur télescopique.

On embarque ainsi un actionneur, d'une puissance non négligeable, et donc d'un poids certain, pour un usage extrêmement ponctuel, puisqu'il ne fonctionne en tout et pour tout que quelques secondes lors d'un cycle d'utilisation de l'aéronef, au relevage de l'atterrisseur, ainsi qu'à la descente de celui-ci, essentiellement pour freiner le mouvement de l'atterrisseur.

Il a par ailleurs été proposé d'équiper au moins un atterrisseur d'un aéronef avec de moteurs électriques aptes à entraîner les roues portées par l'atterrisseur pour permettre le déplacement autonome de l'aéronef sans recours à la poussée des réacteurs, ce qui permet d'économiser du carburant. Un exemple est connu du document US 2 460 387, qui montre un atterrisseur repliable avec un arbre téléscopique monté tournant sur l'atterrisseur entre un actionneur dedié et des moyens de transmission pour transmettre la rotation de cet arbre aux roues portées par l'atterrisseur.

Cependant, cet équipement constitue une masse supplémentaire, disposée en outre au niveau des roues et donc à l'extrémité de l'atterrisseur, ce qui en augmente son inertie, et contribue à augmenter les efforts dits de mise en rotation et de retour élastique que subit l'atterrisseur lors d'un atterrissage.

### OBJET DE L' INVENTION

L'invention a pour objet un atterrisseur muni d'un dispositif unique qui permet d'assurer à la fois le relevage de l'atterrisseur et l'entraînement des roues, qui permet d'éviter les inconvénients précités.

### BREVE DESCRIPTION DE L'INVENTION

En vue de la réalisation de ce but, on propose un atterrisseur d'aéronef, comportant un dispositif électromécanique multifonctions, ce dispositif comportant :
- un premier arbre monté tournant sur l'aéronef autour d'un axe de rotation sensiblement parallèle à un axe d'articulation de l'atterrisseur sur l'aéronef ;
- un deuxième arbre télescopique monté tournant sur l'atterrisseur en descendant le long de ce dernier jusqu'à proximité des roues portées par ce dernier ;
- des moyens de transmission pour transmettre un mouvement de rotation du premier arbre au deuxième arbre ;
- des moyens de transmission pour transmettre un mouvement de rotation du deuxième arbre à au moins une roue portée par l'atterrisseur ;
- si la roue n'est pas équipée d'un frein, des moyens de freinage sélectif de l'un des arbres vis-à-vis de l'atterrisseur ;
- des moyens moteurs adaptés à faire tourner le premier arbre relativement à la structure de l'aéronef afin de, en dépendance du verrouillement de l'atterrisseur dans une position déployée ou une position stockée et du blocage du frein de la roue ou des moyens de freinage spécifiques, soit tourner la roue, soit faire descendre ou remonter l'atterrisseur.

Le dispositif de l'invention permet de réaliser les fonctions suivantes :
- avant l'atterrissage, alors que l'atterrisseur est en soute, l'un ou l'autre des arbres est freiné, soit en freinant la roue, soit en utilisant les moyens de freinage. Le freinage de l'un des arbres conduit à créer une résistance à la rotation du premier arbre vis-à-vis de l'atterrisseur, ce qui tend à entraîner le moteur en rotation lorsque l'atterrisseur est déverrouillé et qu'il entame son mouvement de descente vers la position déployée. La descente de l'atterrisseur peut être contrôlée en contrôlant la rotation forcée du moteur, par exemple en le faisant débiter dans une résistance ;
- juste avant l'atterrissage, alors que l'atterrisseur est en position déployée stabilisée par l'organe de contreventement : le moteur électrique est activé, ce qui permet d'entraîner en rotation le premier arbre, le deuxième arbre, et finalement la roue associée. Ainsi, la roue tourne avant l'impact, et les efforts de mise en rotation et de retour élastique subis par l'atterrisseur en sont diminués d'autant.
- pendant le freinage : la rotation des roues provoque une rotation des arbres, et donc du moteur électrique qui fonctionne en génératrice. L'énergie ainsi récupérée peut être stockée dans un dispositif de stockage d'électricité, ou peut être consommée dans un dispositif dissipateur pour ralentir le moteur et contribuer au freinage de la roue ;
- au roulage, le moteur électrique peut être utilisé pour faire tourner la roue et ainsi participer aux déplacements de l'aéronef sur l'aéroport, sans faire appel aux réacteurs de celui-ci ;
- après décollage, l'un ou l'autre des arbres est freiné, soit en utilisant le frein de la roue si elle en est équipée, soit en utilisant les moyens de freinage. Le freinage de l'un des arbres conduit à créer une résistance à la rotation du premier arbre lorsque le moteur électrique tente de le faire tourner, qui, par réaction, provoque sur l'atterrisseur un couple autour de son axe d'articulation, tendant à faire remonter l'atterrisseur vers sa position stockée.

Ainsi, le dispositif de l'invention sert tout à la fois d'actionneur de relevage/Descente, d'actionneur de mise en rotation des roues, d'actionneur de déplacement de l'aéronef au sol, et permet au surplus l'assistance au freinage ou la récupération d'énergie au freinage. Ainsi, le dispositif de l'invention est bien mieux utilisé qu'un actionneur classique de relevage/descente, et assure des fonctions relatives à la rotation de la roue, pour le prix d'un simple arbre télescopique et d'une transmission du mouvement à la roue, ce qui évite la disposition d'un moteur spécifique dans la roue.

### BREVE DESCRIPTION DES FIGURES

L'invention sera mieux comprise à la lumière de la description qui suit des figures des dessins annexés, parmi lesquelles :
- la figure 1 est une vue schématique de côté d'un atterrisseur principal d'aéronef, illustrant l'installation d'un dispositif multifonctions selon un mode particulier de mise en oeuvre de l'invention ;
- la figure 2 est une vue de face de l'atterrisseur de la figure 1, les moyens moteurs ayant été omis pour plus de clarté ;
- la figure 3 est une vue en perspective partielle de l'aéronef montrant l'utilisation du dispositif pour la mise en rotation en vol de la roue associée)
- la figure 4 est une vue de côté de l'aéronef en train de freiner après son atterrissage ;
- la figure 5 est une vue schématique de dessus de l'aéronef en train de rouler grâce au dispositif de l'invention ;
- la figure 6 est une vue de face de l'atterrisseur en cours de relevage vers sa position stockée ;
- la figure 7 est une vue de côté d'un atterrisseur auxiliaire équipé d'un dispositif selon l'invention.

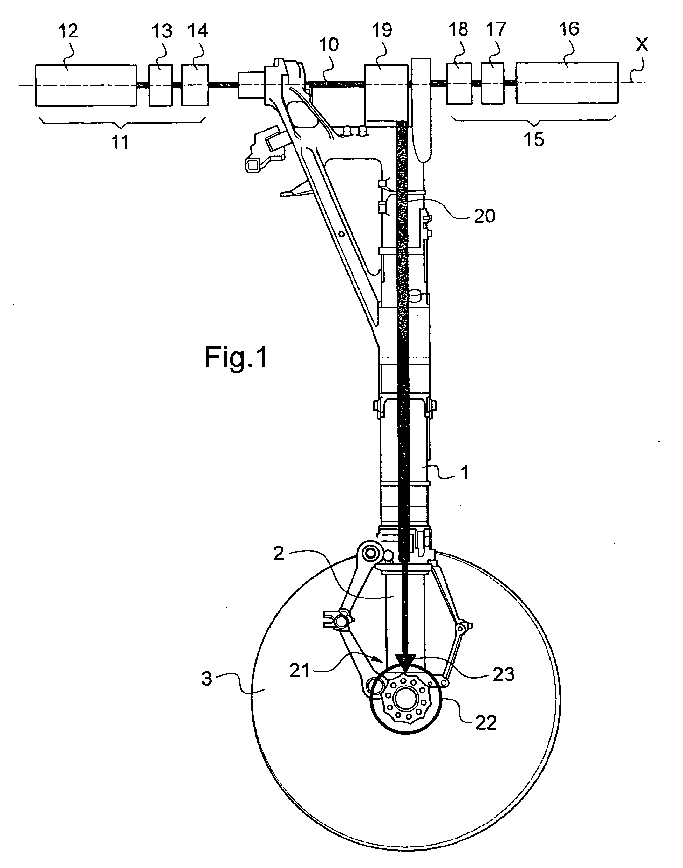

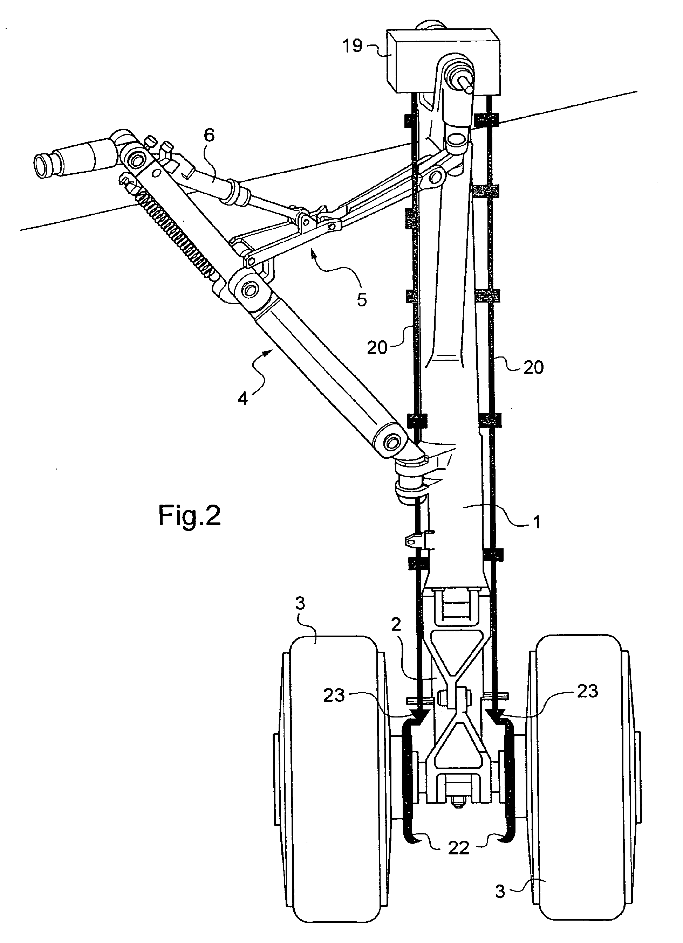

En référence aux figures 1 et 2, le dispositif de l'invention s'applique à un atterrisseur connu en soi comportant un caisson 1 articulé à la structure de l'aéronef selon un axe d'articulation X, et dans lequel une tige coulissante 2 est montée à coulissement télescopique. La tige coulissante forme une partie d'un amortisseur interne, et porte à son extrémité un essieu supportant ici deux roues 3 (l'une d'elles a été omise sur la figure 1, pour plus de clarté). L'atterrisseur est représenté dans sa position déployée dans laquelle il est stabilisé par une contrefiche briseuse 4. La contrefiche briseuse 4 est elle-même stabilisée dans la position alignée représentée ici par un organe de verrouillage 5 qui se verrouille automatiquement lorsque l'atterrisseur arrive vers la position déployée, et qui est muni d'un actionneur de déverrouillage 6 pour permettre le déverrouillage de la contrefiche et donc la remontée de l'atterrisseur vers sa position stockée en soute. Tout cela est bien connu et n'est rappelé qu'à titre d'information.

Le dispositif multifonctions de l'invention comporte tout d'abord un premier arbre 10 monté tournant sur la structure de l'aéronef, selon un axe de rotation R sensiblement parallèle à l'axe d'articulation X de l'atterrisseur. En l'occurrence, ici, les axes X et R sont confondus. Mais l'axe de rotation R pourrait être distinct de l'axe d'articulation X du caisson 1. Le premier arbre 10 est associé à un premier groupe moteur 11 comportant un moteur électrique 12 équipé d'un réducteur 13 et un embrayage 14 permettant de solidariser ou de désolidariser le premier groupe moteur 11 au premier arbre 10. Le premier arbre 10 est associé à un deuxième groupe moteur 15 comportant un moteur électrique 16 équipé d'un réducteur 17 et un embrayage 18 permettant de solidariser ou désolidariser le deuxième groupe moteur 15 au premier arbre 10.

Le premier arbre 10 est associé à un premier boîtier de transmission 19 pour lier en rotation le premier arbre 10 à un deuxième arbre 20 télescopique qui descend le long de l'atterrisseur depuis ledit renvoi d'angle 19 jusqu'à un deuxième boîtier de transmission 21 solidaire de la tige coulissante 2 et situé à proximité de l'un des roues 3, et qui lie en rotation le deuxième arbre 20 télescopique à ladite roue. A cet effet, la roue est équipée d'une roue dentée 22 qui coopère avec un pignon conforme 23 monté en bout de la partie télescopique du deuxième arbre 20.

Le deuxième arbre 20 est bien sûr télescopique pour accommoder les variations de longueur de l'atterrisseur consécutives à l'appui de l'aéronef au sol sur les atterrisseurs, qui tendent à comprimer l'amortisseur et donc à faire rentrer la tige coulissante 2 dans le caisson 1.

Les deux groupes moteurs 11,15 peuvent être utilisés ensemble, lorsqu'une puissance importante est nécessaire, ou de façon séquentielle, par exemple de façon alternée, conduisant à une usure sensiblement égale des deux groupes moteurs.

Ainsi que cela est plus particulièrement visible à la figure 2, il est possible d'installer deux deuxièmes arbres 20, qui sont chacun associés à l'une des roues. Le premier boîtier de transmission 19 contient alors avantageusement un différentiel.

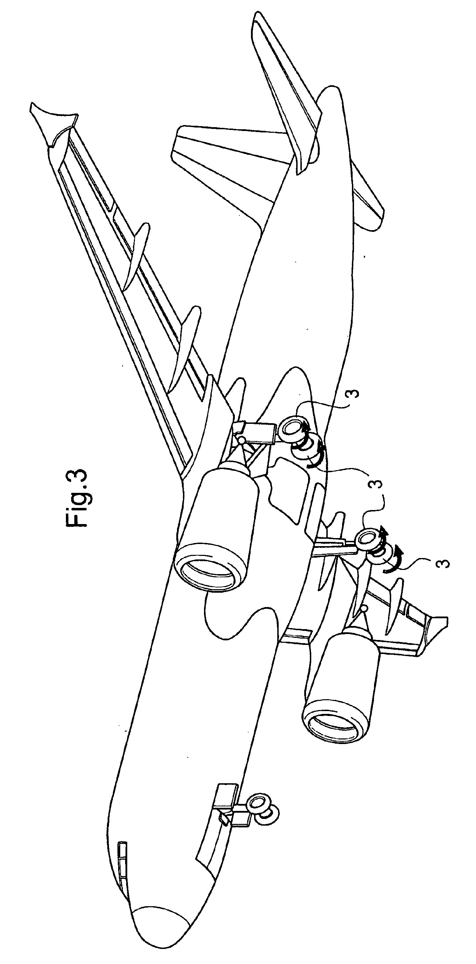

Le dispositif tel qu'il est décrit permet d'assurer plusieurs fonctions. Ainsi, juste avant l'atterrissage, alors que l'atterrisseur est dans la position déployée illustrée à la figure 3, il est possible, en commandant l'un des groupes moteurs (une faible puissance est suffisante), de provoquer la rotation en vol des roues 3 associées au dispositif de l'invention, rotation symbolisée par les flèches en gras. La rotation des roues contribue à diminuer, à l'atterrissage, les efforts de mise en rotation et de retour élastique subis par l'atterrisseur de la mise en rotation des roues non tournantes.

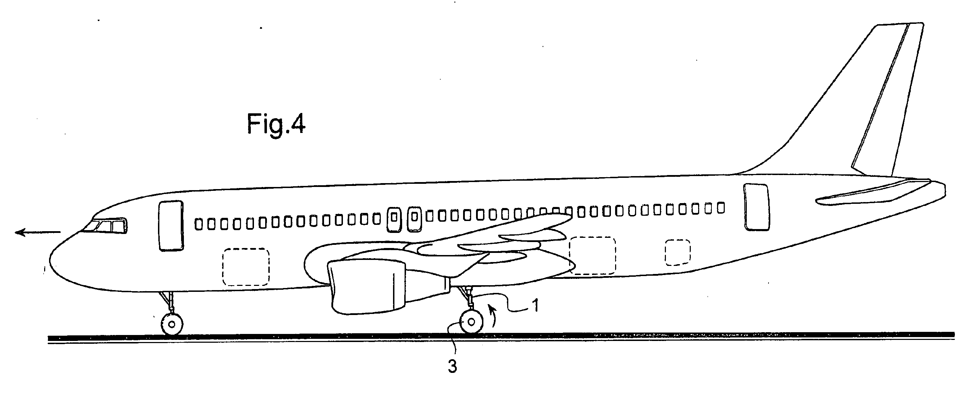

Puis lorsque l'aéronef entame son freinage consécutif à l'atterrissage, comme illustré à la figure 4, la rotation des roues est transmise par les arbres 20,10 aux groupes moteurs 11,15 dont les moteurs sont dès lors entraînés et fonctionnent en génératrices. Il est dès lors possible soit de récupérer l'énergie ainsi produite et la stocker dans des dispositifs de stockage (batteries, capacités...), soit de dissiper cette énergie par exemple au travers d'une résistance pour créer au niveau des moteurs une résistance à la rotation qui contribue au freinage de la roue, de concert avec l'action du frein qui freine simultanément la roue.

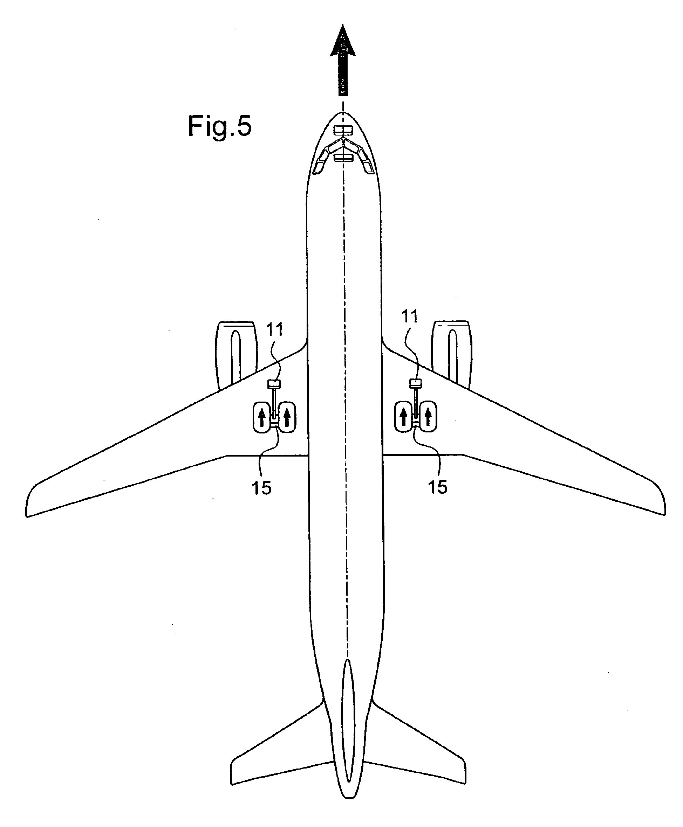

Ensuite, lorsque l'aéronef a fini son freinage, il est possible de déplacer l'aéronef en faisant tourner les groupes moteurs 11,15 des deux atterrisseurs principaux de façon à faire tourner les roues associées, comme cela est symboliquement illustré à la figure 5. Bien entendu, le dispositif similaire qui équipe l'autre atterrisseur principal est de la même façon mis en oeuvre pour faire tourner la roue associée sur l'autre atterrisseur. Une commande identique des deux dispositifs contribue donc à faire tourner les roues associées sur chacun des atterrisseurs principaux, ce qui contribue à faire avancer l'aéronef en ligne droite. Une commande différenciée, selon laquelle les roues de l'un des atterrisseurs tournent plus vite que les roues de l'autre atterrisseur, contribue à aider l'aéronef à virer, de concert avec la commande d'orientation agissant sur les roues de l'atterrisseur auxiliaire.

Ce sont là diverses fonctions qui peuvent être mises en oeuvre grâce au dispositif de l'invention, relatives à la rotation de la roue associée. Mais le dispositif de l'invention peut également servir à la manoeuvre de l'atterrisseur entre sa position déployée et sa position stockée, en remplacement des traditionnels actionneurs de relevage.

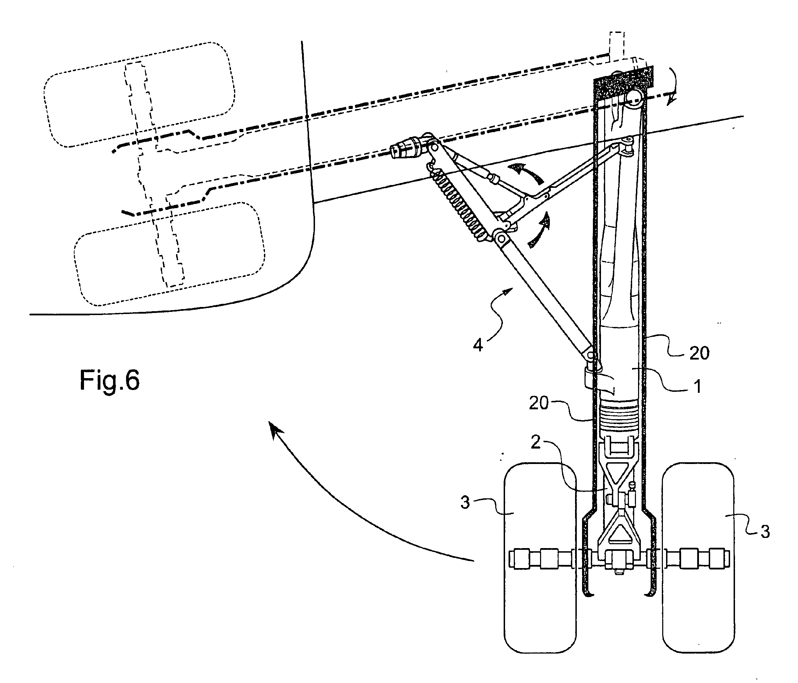

Ainsi, et comme cela est visible à la figure 6, il est possible d'utiliser le dispositif de l'invention pour remonter l'atterrisseur vers sa position de stockage. Pour ce faire, il convient que la contrefiche 4 ait été déverrouillée et son alignement brisé, afin de permettre le relevage de l'atterrisseur. Puis il convient de freiner les roues 3, à l'aide des freins équipant ces dernières. Le blocage des roues a pour effet de bloquer en rotation les deuxièmes arbres 20 et donc le premier arbre 10 vis-à-vis de l'atterrisseur. Si l'on essaie de faire tourner (dans le sens adéquat) le premier arbre 10 au moyen des groupes moteurs 11,15, on génère sur l'atterrisseur un couple autour de l'axe d'articulation X qui tend à faire remonter l'atterrisseur vers sa position stockée. Il est dès lors possible de faire remonter l'atterrisseur jusqu'à sa position stockée, dans laquelle l'atterrisseur est classiquement retenu par un crochet qui immobilise l'atterrisseur dans sa position stockée. En variante, il est possible de maintenir l'atterrisseur en position bloquée en bloquant en rotation le premier arbre 10 par rapport à la structure de l'aéronef, par exemple par un organe d'immobilisation de l'un au moins des groupes moteurs. Cette disposition permet de supprimer le crochet de retenue de l'atterrisseur en position stockée.

Pour la descente de l'atterrisseur, il suffit de relâcher celui-ci, soit en ouvrant le crochet, soit en libérant le premier arbre 10 par rapport à l'aéronef. L'atterrisseur est ainsi libre de se déployer sous l'effet de la gravité. Le dispositif de l'invention peut être alors utilisé soit pour freiner la chute de l'atterrisseur, soit pour contribuer activement à la descente de celui-ci, par exemple pour confirmer l'atterrisseur dans sa position déployée afin de garantir le verrouillage automatique de la contrefiche.

Dans les deux cas, Les roues sont freinées, ce qui a pour effet de bloquer en rotation les deux deuxièmes arbres 20 et le premier arbre 10 vis-à-vis de l'atterrisseur. La descente naturelle de l'atterrisseur sous l'effet de la gravité provoque donc une rotation du premier arbre 10 par rapport à la structure de l'aéronef, et entraîne donc les moteurs des groupes moteurs en rotation. Il suffit alors de contrôler la rotation des moteurs pour ralentir et ainsi contrôler la descente de l'atterrisseur, et éviter qu'il n'arrive avec une vitesse trop importante en position déployée. Le contrôle de la rotation des moteurs peut être simplement obtenu en les faisant débiter dans une résistance ou tout autre dispositif de nature à créer un couple électromagnétique tendant à contrarier la rotation forcée du moteur sous l'effet de la rotation du premier arbre 10, ce qui a pour effet de ralentir la descente de l'atterrisseur. En fin de course, on alimentera au contraire les moteurs des groupes moteurs 11,15 pour au contraire exercer sur le premier arbre 10 un moment qui tend à confirmer l'atterrisseur vers sa position déployée.

Ainsi, avec un seul dispositif, il devient possible d'assurer plusieurs fonctions, telles que la manoeuvre des atterrisseurs, la récupération d'énergie au freinage, le déplacement de l'aéronef sans le concours des réacteurs. Les moteurs du dispositif sont donc avantageusement utilisés pendant les phases d'atterrissage, de roulage au sol de l'aéronef, et de décollage.

L'invention n'est bien sûr pas limitée à ce qui vient d'être décrit, mais englobe au contraire toute variante entrant dans le cadre défini par les revendications.

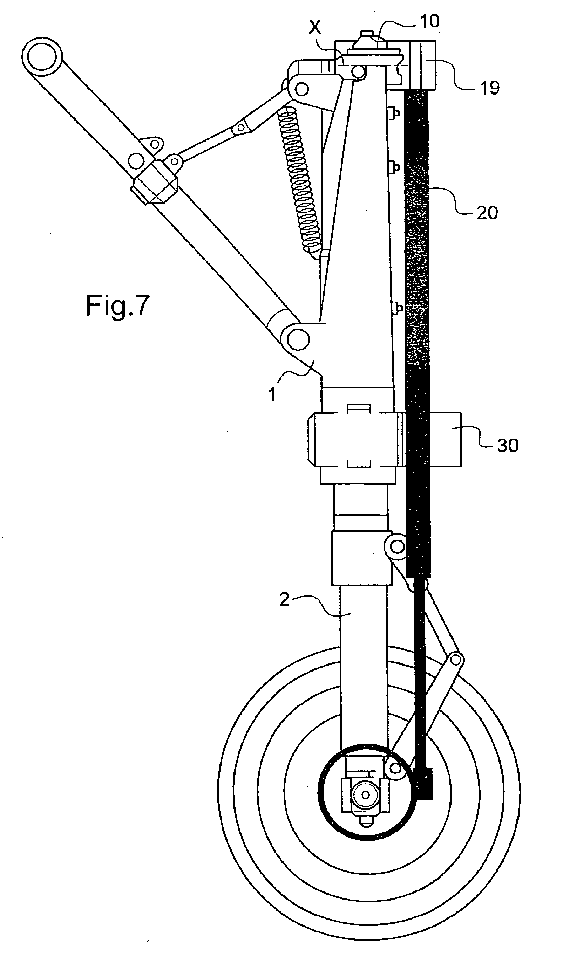

En particulier, le dispositif de l'invention peut être appliqué à un atterrisseur dont les roues sont démunies de freins, comme un atterrisseur auxiliaire. Pour freiner la rotation des arbres relativement à l'atterrisseur, et comme cela est illustré à la figure 7, il convient dès lors de prévoir des moyens de freinage 30 spécifiques de l'un des arbres (ici du deuxième arbre 20) qui pourront, de façon commandée, laisser libre une rotation des arbres et de la roue associée, ou au contraire freiner, voire bloquer la rotation de ces éléments, ce qui contribue, de la même façon que dans l'exemple illustré, à générer par réaction un couple autour de l'axe d'articulation de l'atterrisseur lorsque l'un ou l'autre des groupes moteur est commandé. On remarquera ici que le premier arbre 10 coïncide avec l'axe d'articulation X de l'atterrisseur.

Il est alors possible de prévoir un dispositif multifonction dédoublé, avec pour chacun des roues, un deuxième arbre télescopique, un premier arbre et un groupe moteur correspondant. Ainsi, chaque roue est commandable indépendamment l'une de l'autre, et il est ainsi possible d'imposer des vitesses de rotation différentes, ce qui permet d'aider à l'orientation des roues de l'atterrisseur de l'aéronef. Le cas échéant, il sera possible de supprimer la traditionnelle commande d'orientation équipant l'atterrisseur auxiliaire, celle-ci étant remplacée par le dispositif dédoublé de l'invention, qui servira également, comme expliqué, au déplacement de l'aéronef au sol, à son freinage, et à la manoeuvre de l'atterrisseur auxiliaire entre la position déployée et la position stockée.

En outre, il est bien évident que l'on pourra équiper le dispositif de l'invention d'un seul groupe moteur, au lieu des deux illustrés, le groupe moteur pouvant le cas échéant être équipé de plusieurs moteurs. On pourra également prévoir des boîtes de vitesse ou des variateurs entre le ou les groupes moteurs et le premier arbre pour permettre la modulation de la transmission de puissance.

Par ailleurs, les moyens moteurs peuvent être électriques, hydrauliques, ou de tout autre technologie, pourvu qu'ils puissent fonctionner aussi bien en générateur qu'en récepteur.

Enfin, bien que les dispositifs illustrés sont associés aux deux roues portées par la tige de l'atterrisseur, on pourra associer le dispositif à une seule des roues. Dans ce cas, le dispositif ne comporte qu'un seul deuxième arbre télescopique.

## Revendications

1. Atterrisseur d'aéronef comportant un dispositif électromécanique multifonctions, ce dispositif comportant au moins :
- un premier arbre (10) apte à être monté tournant sur l'aéronef autour d'un axe de rotation (R) sensiblement parallèle à un axe d'articulation (X) de l'atterrisseur sur l'aéronef ;
- un deuxième arbre (20) télescopique monté tournant sur l'atterrisseur en descendant le long de ce dernier jusqu'à proximité des roues portées par ce dernier ;
- des moyens de transmission (19) pour transmettre un mouvement de rotation du premier arbre au deuxième arbre ;
- des moyens de transmission (21) pour transmettre un mouvement de rotation du deuxième arbre à au moins une roue portée par l'atterrisseur ;
- si la roue n'est pas équipée d'un frein, des moyens de freinage (30) spécifiques de l'un des arbres vis-à-vis de l'atterrisseur ;
- des moyens moteurs (11,15) pour faire tourner le premier arbre relativement à la structure de l'aéronef afin de, en dépendance du verrouillement de l'atterrisseur dans une position déployée ou une position stockée et du blocage du frein de la roue ou des moyens de freinage spécifiques, soit tourner la roue, soit faire descendre ou remonter l'atterrisseur.

2. Procédé de relevage d'un atterrisseur d'aéronef selon la revendication 1, entre une position déployée et une position stockée, comprenant les étapes de :
- déverrouiller l'organe de contreventement de l'atterrisseur;
- bloquer les arbres du dispositif vis-à-vis de l'atterrisseur, en actionnant le frein de la roue, ou les moyens de freinage spécifiques ;
- commander les moyens moteurs pour faire tourner le premier arbre relativement à la structure de l'aéronef.

3. Procédé de descente d'un atterrisseur d'aéronef selon la revendication 1, entre une position stockée et une position déployée, comprenant les étapes de :
- relâcher l'atterrisseur pour lui permettre de descendre ;
- bloquer les arbres du dispositif vis-à-vis de l'atterrisseur, en actionnant le frein de la roue, ou les moyens de freinage spécifiques ;
- contrôler la rotation forcée du moteur induite par la descente de l'atterrisseur pour réguler la descente de l'atterrisseur.

## Patentansprüche

1. Fahrgestell eines Luftfahrzeugs, umfassend eine multifunktionale elektromechanische Vorrichtung, wobei diese Vorrichtung mindestens umfasst:
- eine erste Welle (10), die an dem Luftfahrzeug um eine Drehachse (R), drehbar gelagert sein kann, die im Wesentlichen parallel zur einer Gelenkachse (X) des Fahrgestells an dem Luftfahrzeug ist;
- eine zweite teleskopische Welle (20), die drehbar an dem Fahrgestell gelagert ist, wobei sie sich in dessen Längsrichtung bis in die Nähe der vom Fahrgestell getragenen Räder erstreckt;
- Getriebemittel (19) zur Übertragung einer Drehbewegung von der ersten Welle zur zweiten Welle;
- Getriebemittel (21) zur Übertragung einer Drehbewegung von der zweiten Welle an mindestens ein vom Fahrgestell getragenes Rad;
- falls das Rad nicht mit einer Bremse ausgestattet ist, spezifische Bremsmittel (30) für eine der Wellen gegenüber dem Fahrgestell;
- Antriebsmittel (11, 15), um die erste Welle zur Rotation zu bringen relativ zum Aufbau des Luftfahrzeugs, um, in Abhängigkeit einer Blockierung des Fahrgestells in einer ausgefahrenen Position oder einer eingefahrenen Position und einer Blockierung der Bremse des Rads oder der spezifischen Bremsmittel entweder das Rad zum Drehen oder das Fahrgestell zum Absenken oder Einfahren zu bringen.

2. Verfahren zum Einfahren eines Fahrgestells eines Luftfahrzeugs nach Anspruch 1 zwischen einer ausgefahrenen und einer eingefahrenen Position, umfassend die folgenden Schritte:
- Entriegeln des Aussteifungsorgans des Fahrgestells;
- Blockieren der Wellen der Vorrichtung gegenüber dem Fahrgestell durch Betätigen der Bremse des Rads oder Blockieren der spezifischen Bremsmittel;
- Steuern der Antriebsmittel, um die erste Welle relativ zum Aufbau des Luftfahrzeugs zur Drehung zu bringen.

3. Verfahren zum Absenken eines Fahrgestells eines Luftfahrzeugs nach Anspruch 1 zwischen einer eingefahrenen Position und einer ausgefahrenen Position, umfassend die Schritte:
- Freigeben des Fahrgestells, damit es ausgefahren werden kann,
- Blockieren der Wellen der Vorrichtung gegenüber dem Fahrgestell, indem die Bremsen des Rads betätigt werden, oder Blockieren der spezifischen Bremsmittel;
- Steuern der durch den Motor forcierten Rotation, die durch das Ausfahren des Fahrgestells induziert wurde, um das Absenkens des Fahrgestells zu regulieren.

## Claims

1. Aircraft undercarriage comprising a multifunction electromechanical device , said device comprising at least:
· a first shaft (10) adapted to be mounted to rotate on the aircraft about an axis of rotation (R) that is substantially parallel to a hinge axis (X) of the undercarriage relative to the aircraft;
· a telescopic second shaft (20) mounted to rotate on the undercarriage extending down therealong to the proximity of the wheels carried thereby;
· transmission means (19) for transmitting rotary motion from the first shaft to the second shaft;
· transmission means (21) for transmitting rotary motion from the second shaft to at least one wheel carried by the undercarriage;
· if the wheel is not fitted with a brake, specific brake means (30) for braking one of the shafts relative to the undercarriage; and
· motor means (11, 15) for causing the first shaft to rotate relative to the structure of the aircraft in order to, depending upon the locking of the undercarriage in a deployed position or in a stowed position and upon the locking of the wheel brake or of the specific brake means (30), either rotating the wheel, or raising the undercarriage.

2. A method of raising an aircraft undercarriage according to claim 1, from a deployed position to a stowed position, the method comprising the following steps:
· unlocking the side-brace member of the undercarriage;
· preventing the shaft of the device from rotating relative to the undercarriage, by actuating the brake of the wheel or by actuating the specific brake means; and
· operating the motor means to cause the first shaft to rotate relative to the structure of the aircraft.

3. A method of lowering an aircraft undercarriage according to claim 1 from a stowed position to a deployed position, the method comprising the steps of:
· releasing the undercarriage to allow it to be lowered;
· preventing the shafts of the device from rotating relative to the undercarriage, by actuating the brake of the wheel or by actuating the specific brake means; and
· controlling the forced rotation of the motor as induced by the lowering of the undercarriage so as to control the lowering of the undercarriage.
